# FASCICULE DE BREVET EUROPEEN

(11) **EP 3 047 551 B1**
(45) Date de publication et mention de la délivrance du brevet: **13.06.2018**
(21) Numéro de dépôt: 14789384.6
(22) Date de dépôt: 17.09.2014
(51) Int. Cl.: H01T 1/22, E21B 28/00, G01V 1/157

(54) **ÉCLATEUR D'UN DISPOSITIF DE GÉNÉRATION D'ARC ÉLECTRIQUE ET DISPOSITIF DE GÉNÉRATION D'ARC ÉLECTRIQUE CORRESPONDANT**
FUNKENSTRECKE EINER ELEKTRISCHEN LICHTBOGENERZEUGUNGSVORRICHTUNG UND ENTSPRECHENDE ELEKTRISCHE LICHTBOGENERZEUGUNGSVORRICHTUNG
SPARK-GAP OF AN ELECTRIC ARC GENERATION DEVICE, AND CORRESPONDING ELECTRIC ARC GENERATION DEVICE

(30) Priorité: 19.09.2013 FR 1359031
(43) Date de publication de la demande: 27.07.2016
(73) Titulaire: ENE29 S.à r.l., 2453 Luxembourg (LU)
(72) Inventeur: DELCHAMBRE, Michael, F-31100 Toulouse (FR); LABUDA, Sergei, F-31860 Pins-Justaret (FR); ONQUIERT, Guillaume, F-31550 Cintegabelle (FR)
(74) Mandataire: Cabinet Plasseraud
(86) Numéro de dépôt international: PCT/IB2014/064595
(87) Numéro de publication internationale: WO 2015/040556

(56) Documents cités:
- JP-A- 2007 265 834
- JP-A- 2010 165 487
- US-A- 3 225 578
- US-A- 4 997 044

## Description

La présente invention concerne un éclateur d'un dispositif de génération d'arc électrique ainsi qu'un dispositif de génération d'arc électrique correspondant.

Un tel dispositif est destiné à venir prendre place dans un puits profond (par exemple plusieurs kilomètres). La génération d'un arc électrique est alors par exemple utilisée pour créer une onde sismique dans le sol ou pour une stimulation de production d'hydrocarbure.

Le document WO-90/13830 illustre un état de la technique du domaine de la présente invention. Il divulgue une source d'ondes sismiques utilisable dans un trou de forage rempli de liquide. Le dispositif décrit dans ce document a pour but de créer des ondes sismiques afin de réaliser par exemple une étude géologique du sol. La source d'ondes sismiques décrite comprend un module soutenu par un câble et contenant un organe destiné à générer une haute tension et à charger une batterie de condensateurs. En provoquant alors une décharge rapide des condensateurs à travers une paire d'électrodes définissant un intervalle de décharge, une onde acoustique est créée. Les électrodes sont immergées dans un liquide, à la même pression que le liquide dans le trou de forage (au niveau des électrodes) et sont séparées par un intervalle de largeur prédéterminée.

Les figures 3 et 4 de ce document de l'art antérieur montrent deux formes de réalisation distinctes d'un éclateur. Selon une première forme de réalisation, une électrode centrale est disposée à égale distance de trois électrodes périphériques en définissant avec chacune d'elles un intervalle de décharge. La seconde forme de réalisation proposée ici comprend deux électrodes similaires mises en regard l'une de l'autre en respectant entre elles un intervalle de décharge.

Dans le domaine de la stimulation de la production de pétrole, le document US-4,345,650 montre un dispositif électro-hydraulique permettant de générer une onde de choc afin de créer une migration forcée de pétrole vers un puits de collecte. Une étincelle est créée entre deux électrodes pour générer l'onde de choc. Un réflecteur est ici prévu pour orienter l'onde de choc.

Dans ce même domaine de la stimulation de la production de pétrole, le document WO-01/59252 décrit ici un dispositif comportant des sources d'énergie pulsées avec, d'une part, un générateur électro-hydraulique qui produit une impulsion électromagnétique et une impulsion acoustique et, d'autre part, un générateur électromagnétique qui produit une impulsion électromagnétique. La forme de réalisation de la figure 8 de ce document illustre un éclateur avec deux électrodes disposées dans une enveloppe flexible remplie de liquide. Chaque électrode est portée par un support d'électrode et des bras métalliques relient les deux supports d'électrode. Ces bras s'étendent parallèlement aux électrodes, à distance de celles-ci.

Dans une structure telle celle illustrée par la figure 8 du document WO-01/59252, lors d'une décharge électrique entre les électrodes, il convient d'éviter qu'une décharge se réalise entre une électrode et un bras métallique. Cette décharge serait alors non contrôlée et l'énergie dissipée par celle-ci est considérée comme étant perdue. Le document US- 4,997,044 décrit le préambule de la revendication 1. Lorsque l'on souhaite miniaturiser l'éclateur, les bras métalliques qui peuvent être par exemple utilisés pour réaliser un retour de courant, ou un réflecteur, se rapprochent des électrodes et le risque de fuite devient plus important.

Un autre problème technique que l'on rencontre avec les éclateurs de l'art antérieur est l'usure des électrodes. En effet, à chaque décharge électrique, des électrons sont arrachés de l'une des électrodes et une usure de l'extrémité des électrodes est constatée. Au fur et à mesure de l'utilisation de l'éclateur, la distance séparant les deux électrodes augmente, diminuant ainsi les performances du dispositif.

Le document WO-90/13830 propose d'utiliser un matériau réfractaire tel du tungstène pour réaliser les extrémités des électrodes. Le document WO-0159252 propose alors d'avoir une électrode consommable de type "crayon" avec une électrode centrale consommable et de longueur ajustable (figure 10), ou bien avec un filament (figure 11). Une autre solution proposée par ce dernier document (figure 12) est de faire passer du gaz par une électrode, le gaz s'ionisant sous l'effet de la différence de potentiel entre les électrodes et protégeant ainsi les électrodes.

La présente invention a alors pour but de fournir un éclateur dans lequel des électrodes sont disposées entre des bras métalliques mais pour lequel le risque qu'un arc électrique se développe entre une électrode et un bras est sensiblement réduit par rapport aux dispositifs de l'art antérieur.

Avantageusement, la présente invention permettra de fournir un éclateur de ce type de taille réduite par rapport aux éclateurs connus de l'art antérieur.

Un éclateur selon la présente invention présentera également de préférence une durée de vie prolongée grâce à une usure maîtrisée des électrodes.

À cet effet, la présente invention propose un éclateur d'un dispositif de génération d'arc électrique comportant :
- un premier corps portant un premier support d'électrode associé à une première électrode présentant une première extrémité d'électrode,
- un second corps portant un second support d'électrode associé à une seconde électrode disposée en vis-à-vis de la première extrémité d'électrode, et
- un bras de liaison métallique reliant le premier corps au second corps,
le premier corps et le second corps présentant une forme extérieure globalement cylindrique et étant alignés sur un même axe longitudinal.

Selon la présente invention, la première extrémité d'électrode est décalée par rapport à l'axe longitudinal du côté opposé au bras de liaison.

De cette manière, par rapport à un dispositif de l'art antérieur, les électrodes sont éloignées du bras de liaison permettant de diminuer ainsi sensiblement le risque que l'arc électrique dévie vers le bras de liaison.

Dans un éclateur selon la présente invention, pour limiter encore le risque que l'arc électrique soit dévié, on prévoit avantageusement que cet éclateur ne présente qu'un seul bras de liaison.

Une première forme de réalisation de la présente invention prévoit que la première électrode se présente sous la forme d'une tige portant à son extrémité la première extrémité d'électrode d'axe incliné par rapport à l'axe longitudinal.

Dans cette première forme de réalisation et/ou dans une forme de réalisation alternative, la seconde électrode peut présenter une base munie de moyens de fixation de la seconde électrode sur le second support et une seconde extrémité d'électrode, opposée à la base de la seconde électrode et disposée en vis-à-vis de la première extrémité d'électrode ; la base de la seconde électrode peut être sensiblement alignée sur l'axe longitudinal, et la seconde électrode présente par exemple un décrochement de telle sorte que la seconde extrémité d'électrode soit décentrée par rapport à l'axe longitudinal, du côté opposé au bras de liaison.

Pour limiter l'usure de la seconde électrode, cette dernière présente avantageusement en vis-à-vis de la première extrémité d'électrode une surface concave.

Pour pouvoir être changée, la seconde électrode présente par exemple une base munie de moyens de fixation de la seconde électrode sur le second support et une seconde extrémité d'électrode, opposée à la base de la seconde électrode et disposée en vis-à-vis de la première extrémité d'électrode, et la seconde extrémité d'électrode est avantageusement une pièce distincte fixée sur la seconde électrode à l'aide d'au moins une goupille.

Dans un éclateur selon la présente invention, on peut avantageusement prévoir une membrane entourant au moins partiellement la première électrode, la seconde électrode et le bras de liaison de manière à créer une enceinte étanche autour d'un espace compris entre la première électrode et la seconde électrode. De la sorte, il est plus aisé de maitriser un arc électrique généré entre les électrodes. Dans cette forme de réalisation, l'enceinte délimitée notamment par la membrane contient par exemple un fluide qui est de préférence un liquide diélectrique.

La présente invention concerne également un dispositif de génération d'un arc électrique, caractérisé en ce qu'il présente un éclateur tel que présenté ci-dessus, et en ce que la seconde électrode est reliée à la masse dudit dispositif.

Des détails et avantages de la présente invention apparaitront mieux de la description qui suit, faite en référence au dessin schématique annexé sur lequel :

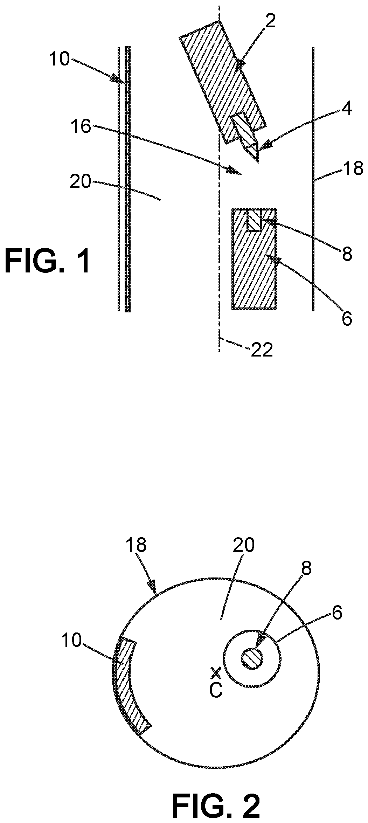

La figure 1 est une vue de principe en élévation d'un éclateur selon la présente invention,
La figure 2 est une vue schématique de dessus correspondant à la figure 1,

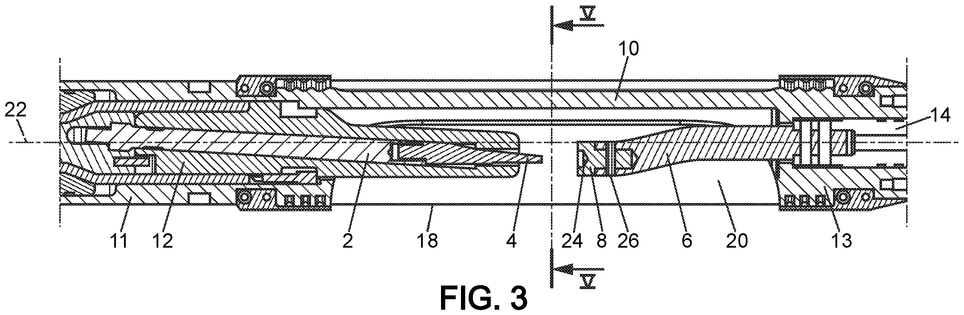

La figure 3 est une vue en coupe longitudinale d'un éclateur selon une forme de réalisation préférée de la présente invention,

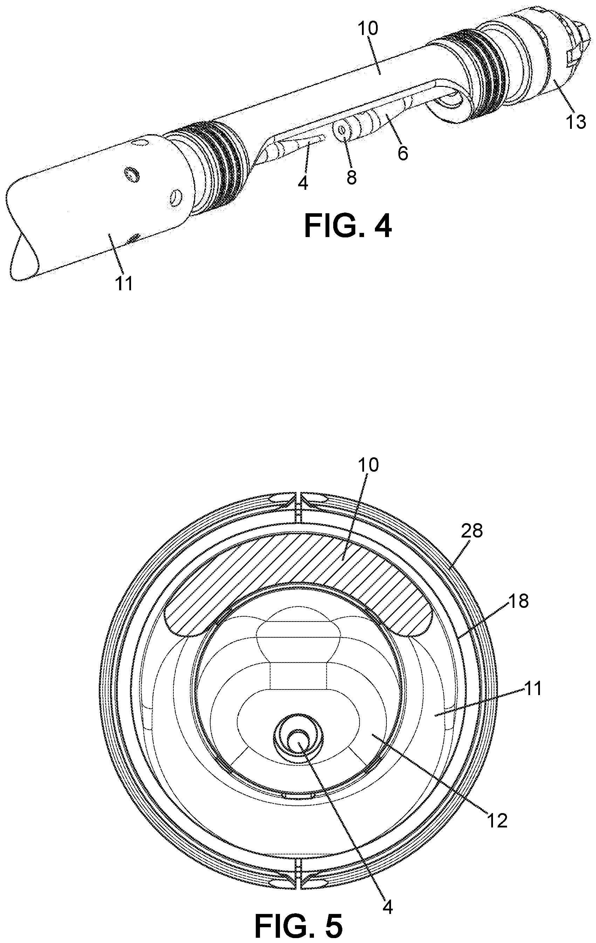

La figure 4 est une vue schématique en perspective d'un éclateur sur laquelle certains éléments ont été supprimés pour plus de clarté, et
La figure 5 est une vue en coupe à échelle agrandie selon la ligne de coupe V-V de la figure 3.

Les figures 1 et 2 illustrent très schématiquement le principe de la présente invention. Sur ces figures, on a représenté un éclateur comportant une première électrode 2 présentant une première extrémité 4 d'électrode, une seconde électrode 6 présentant une seconde extrémité 8 d'électrode et un bras de liaison 10 reliant un corps supérieur 11 portant la première électrode 2 par l'intermédiaire d'un premier support 12 d'électrode en matière isolante à un corps inférieur 13 portant la seconde électrode 4 par l'intermédiaire d'un second support 14 d'électrode (cf. figure 3). Le corps supérieur 11 et le corps inférieur 13 présentent chacun une enveloppe cylindrique circulaire et sont alignés sur un même axe longitudinal 22. Le corps supérieur 11, le corps inférieur 13 et le bras de liaison 10 peuvent ne former qu'une seule pièce.

La première électrode 2 est une électrode de type connu. Des électrodes décrites dans les documents de l'art antérieur cités au préambule de ce document (WO-90/13830 ou WO-01/59252 par exemple) peuvent être reprises ici. Il s'agit par exemple d'une électrode en forme de tige cylindrique circulaire. Dans la forme de réalisation préférée illustrée ici, la première électrode 2 et la seconde électrode 6 présentent chacune une extrémité d'électrode formée par une pièce distincte. Le premier support 12 isole, d'une part, la première électrode 2 du corps supérieur 11 et, d'autre part, maintient mécaniquement la première électrode 2. Un dispositif électronique de type connu, comprenant généralement une série de condensateurs, permet de mettre la première électrode 2, ainsi que la première extrémité 4 d'électrode, à un potentiel électrique très élevé en un temps très bref tout en y faisant passer un courant de forte intensité.

La seconde électrode 6, respectivement la seconde extrémité 8 d'électrode, est disposée en vis-à-vis de la première électrode 2, respectivement de la première extrémité 4 d'électrode. Le courant entrant par la première électrode 2 doit passer dans la seconde électrode 6 en limitant autant que possible les fuites de courant qui peuvent se faire essentiellement via le bras de liaison 10, par exemple de telle sorte qu'il se forme une zone d'éclatement 16 entièrement comprise entre la première électrode 2 et la seconde électrode 6, et plus précisément entre la première extrémité 4 d'électrode et la seconde extrémité 8 d'électrode.

La présente invention propose à cet effet d'éloigner autant que possible les extrémités d'électrode entre lesquelles se forme un arc électrique du bras de liaison 10.

Un éclateur, et plus globalement un dispositif de génération d'un arc électrique, présente une forme extérieure globalement cylindrique correspondant à la forme de l'enveloppe du corps supérieur 11 et du corps inférieur 13. Un tel dispositif est en effet destiné à être introduit dans un trou de forage circulaire et présente donc une forme adaptée au trou dans lequel il passe. L'éclateur, et le dispositif de génération d'un arc électrique correspondant, présente ainsi un axe longitudinal médian correspondant à l'axe longitudinal 22. Les électrodes de l'éclateur sont habituellement (dans l'état de l'art antérieur à la présente invention) alignées sur cet axe longitudinal médian.

Comme illustré sur les figures, les électrodes sont généralement confinées dans une enceinte remplie d'un fluide, gaz ou liquide, diélectrique de préférence, dont la composition est maitrisée pour un meilleur contrôle de l'arc électrique généré entre les électrodes. Une membrane souple 18 est ainsi disposée autour des électrodes et du (des) bras de liaison 10, entre le premier support 12 et le second support 14, de manière à former une enceinte étanche 20 dans laquelle est enfermée par exemple une quantité prédéterminée d'un liquide diélectrique. Lorsqu'une onde est produite par une décharge entre les électrodes, l'onde se propage dans le fluide au sein de l'enceinte puis est transmise par la membrane souple 18 au fluide extérieur (du pétrole, de la boue, de l'eau ou autre) dans lequel le dispositif est immergé.

La membrane souple 18, au repos, présente une forme cylindrique tubulaire dont l'axe longitudinal correspond à l'axe longitudinal 22 de l'éclateur et du dispositif de génération d'arc électrique correspondant.

Par rapport à la forme de l'art antérieur décrite plus haut dans laquelle les électrodes de l'éclateur sont alignées sensiblement sur l'axe longitudinal de l'éclateur et donc aussi de la membrane souple, la présente invention propose d'excentrer les électrodes et de les éloigner autant que possible du bras de liaison 10 décrit plus haut. Sur la figure 2, on remarque ainsi par exemple que la seconde électrode 6 et sa seconde extrémité sont décentrées par rapport au centre C de l'enceinte 20 à l'opposé du bras de liaison 10. Il est alors préférable de n'avoir qu'un seul bras de liaison 10. Toutefois l'invention peut aussi être mise en oeuvre avec une forme de réalisation présentant plusieurs bras de liaison. De préférence, les bras de liaison seront d'un même côté de l'éclateur. Les électrodes sont alors décalées par rapport à l'axe longitudinal du côté opposé aux bras de liaison. Si deux bras de liaison sont diamétralement opposés, on peut également éloigner les électrodes des bras de liaison en les déplaçant dans un plan de symétrie des deux bras de liaison.

La figure 3 illustre une forme de réalisation préférée de la présente invention en coupe longitudinale. Les références utilisées sur les figures 1 et 2 sont reprises ici pour désigner des pièces similaires. Pour mieux illustrer cette forme de réalisation, la figure 4 montre le dispositif de la figure 3 en perspective, sans montrer toutefois la membrane 18 ni le premier support 12.

On retrouve sur la figure 3 la structure décrite plus haut en référence aux figures 1 et 2 mais plus de détails sont donnés sur la figure 3.

Sur cette figure 3, on a représenté l'axe longitudinal 22 qui correspond à l'axe longitudinal du corps supérieur 11, du corps inférieur 13 et de la membrane souple 18 (au repos).

La première électrode 2 se présente sous la forme d'une tige cylindrique circulaire et est prolongée par sa première extrémité 4 d'électrode. Cet ensemble est incliné par rapport à l'axe longitudinal 22. L'inclinaison de cet ensemble est telle que l'extrémité distale de la première extrémité 4 d'électrode est plus éloignée du bras de liaison 10 que l'axe longitudinal 22 (parallèle au bras de liaison 10).

La figure 5 illustre l'inclinaison de la première électrode, plus précisément de la première extrémité 4 d'électrode. On remarque sur cette figure comment cette extrémité d'électrode est écartée du bras de liaison 10. Cette figure illustre en outre une coquille 28 qui vient entourer le corps supérieur 11 et qui peut être utilisée pour maintenir la membrane 18 à l'une de ses extrémités. Une coquille semblable peut bien entendu également être prévue autour du corps inférieur 13.

La seconde extrémité 8 d'électrode est aussi décalée par rapport à l'axe longitudinal 22 de manière à être plus éloignée du bras de liaison 10 que l'axe longitudinal 22. La seconde extrémité 8 d'électrode et la première extrémité 4 d'électrode sont disposées de telles sorte que la distance la plus courte séparant ces deux extrémités soit sensiblement parallèle à l'axe longitudinal 22.

La seconde extrémité 8 d'électrode présente de préférence une surface concave 24, par exemple en forme de coupelle, face à l'extrémité distale de la première extrémité 4 d'électrode. La seconde électrode 6, et donc aussi la seconde extrémité 8 qui lui est associée, est prévue pour être reliée à la masse. De ce fait, lors de la création d'un arc électrique entre les deux électrodes, c'est au niveau de cette seconde extrémité 8 que l'on observera une usure d'électrode. La présence de la surface concave 24 permet de limiter cette usure, par rapport à une électrode pointue. En effet, l'usure de la seconde électrode se répartit sur toute la surface concave 24. De ce fait, la distance séparant les deux extrémités d'électrode varie peu et les caractéristiques de l'arc électrique généré entre les électrodes ne sont pas dégradées.

Il est prévu aussi d'éventuellement changer la seconde extrémité 8 d'électrode. Dans la forme de réalisation illustrée on remarque en effet que cette seconde extrémité 8 d'électrode est montée sur l'électrode 6 à l'aide d'une goupille 26.

Pour décentrer la seconde extrémité 8 d'électrode par rapport à l'axe longitudinal 22, il est prévu ici d'utiliser une seconde électrode 6 recourbée. Ainsi cette seconde électrode 6 présente une base, ou extrémité proximale, permettant de fixer la seconde électrode 6 sur le second support 14, une partie centrale avec un décrochement en S portant une extrémité distale configurée pour recevoir la seconde extrémité 8 d'électrode.

Un éclateur tel que décrit ci-dessus est destiné à être couplé à un générateur haute tension et fort courant, la seconde électrode 6 étant reliée à la masse d'un tel générateur. Un arc électrique est généré lorsque la tension au niveau de la première électrode 2 dépasse un seuil donné, appelé seuil d'éclatement. La valeur du seuil d'éclatement dépend notamment de la distance séparant les deux électrodes, de la nature du fluide diélectrique disposé à l'intérieur de l'enceinte 20 ainsi qu'éventuellement de la pression régnant dans cette enceinte.

La forme de réalisation de l'invention décrite ci-dessus permet d'éviter une génération d'arc électrique entre la première électrode, destinée à être reliée à une source haute tension, et le(s) bras de liaison métallique(s) utilisé(s) comme support pour maintenir la structure de l'éclateur. En effet, le fait d'éloigner les électrodes de ce(s) bras de liaison réduit considérablement, et peut même supprimer, tout risque d'une génération d'arc électrique entre la première électrode et le bras métallique.

Dans la forme de réalisation décrite ci-dessus, la seconde électrode 6 présente de préférence une surface en vis-à-vis de la première électrode 2 plus importante que dans les dispositifs comparables de l'art antérieur. De cette manière, il est possible d'avoir une consommation de matière au niveau de la seconde électrode, qui est reliée à la masse, s'effectuant régulièrement sur toute la surface concave 24. L'usure étant répartie sur une plus grande surface, la distance entre la première électrode 2 et la seconde électrode 6 diminue bien moins rapidement que dans les formes de réalisation connues de l'art antérieur. On arrive ainsi à maintenir bien plus longtemps un espacement optimal entre les deux électrodes de l'éclateur.

De manière préférée, la surface concave 24 présente au moins une arête vive qui permet de faciliter le déclenchement d'une génération d'arc électrique. Cette caractéristique permet d'éviter encore mieux qu'un arc ne se dirige vers le(s) bras de liaison. Comme illustré sur la figure 3, on peut par exemple prévoir une arête autour de la surface concave 24 prévue dans la seconde extrémité 8 d'électrode.

La présente invention fournit ainsi des moyens permettant de limiter les risques de fuite d'un arc vers un bras de liaison. Elle permet par là de miniaturiser un éclateur présentant une telle structure, c'est-à-dire avec des bras de liaison.

Dans la forme de réalisation préférée, on remarque qu'une électrode est inclinée et que l'autre est recourbée pour éloigner les extrémités des électrodes, et par là l'arc électrique destiné à être généré entre elles, d'un bras de liaison métallique. On pourrait avoir deux électrodes inclinées ou bien deux électrodes recourbées. On peut également envisager de décaler les électrodes par d'autres moyens, par exemple en les excentrant.

La présente invention ne se limite pas donc à la forme de réalisation préférée décrite ci-dessus à titre d'exemple non limitatif et représentée au dessin et aux variantes évoquées mais elle concerne toute forme de réalisation à la portée de l'homme du métier dans le cadre des revendications ci-après.

## Revendications

1. Éclateur d'un dispositif de génération d'arc électrique comportant :
- un premier corps (11) portant un premier support (12) d'électrode associé à une première électrode (2) présentant une première extrémité (4) d'électrode,
- un second corps (13) portant un second support (14) d'électrode associé à une seconde électrode (6) disposée en vis-à-vis de la première extrémité (4) d'électrode, et
- un bras de liaison métallique (10) reliant le premier corps (11) au second corps (13),
le premier corps (11) et le second corps (13) présentant une forme extérieure globalement cylindrique et étant alignés sur un même axe longitudinal (22),
caractérisé en ce la première extrémité (4) d'électrode est décalée par rapport à l'axe longitudinal (22) du côté opposé au bras de liaison (10).

2. Éclateur selon la revendication 1, **caractérisé en ce qu'**il présente un unique bras de liaison (10).

3. Éclateur selon l'une des revendications 1 ou 2, **caractérisé en ce que** la première électrode (2) se présente sous la forme d'une tige portant à son extrémité la première extrémité (4) d'électrode d'axe incliné par rapport à l'axe longitudinal (22).

4. Éclateur selon l'une des revendications 1 à 3, **caractérisé en ce que** la seconde électrode (6) présente une base munie de moyens de fixation de la seconde électrode (6) sur le second support (14) et une seconde extrémité (8) d'électrode, opposée à la base de la seconde électrode et disposée en vis-à-vis de la première extrémité (4) d'électrode, **en ce que** la base de la seconde électrode (6) est sensiblement alignée sur l'axe longitudinal (22), et **en ce que** la seconde électrode (6) présente un décrochement de telle sorte que la seconde extrémité (8) d'électrode est décentrée par rapport à l'axe longitudinal (22), du côté opposé au bras de liaison (10).

5. Éclateur selon l'une des revendications 1 à 4, **caractérisé en ce que** la seconde électrode (6) présente en vis-à-vis de la première extrémité (4) d'électrode une surface concave (24).

6. Éclateur selon l'une des revendications 1 à 5, **caractérisé en ce que** la seconde électrode (6) présente une base munie de moyens de fixation de la seconde électrode (6) sur le second support (14) et une seconde extrémité (8) d'électrode, opposée à la base de la seconde électrode et disposée en vis-à-vis de la première extrémité (4) d'électrode, et **en ce que** la seconde extrémité (8) d'électrode est une pièce distincte fixée sur la seconde électrode (6) à l'aide d'au moins une goupille.

7. Éclateur selon l'une des revendications 1 à 6, **caractérisé en ce qu'**il comporte une membrane (18) entourant au moins partiellement la première électrode (2), la seconde électrode (6) et le bras de liaison (10) de manière à créer une enceinte (20) étanche autour d'un espace compris entre la première électrode (2) et la seconde électrode (6).

8. Éclateur selon la revendication 7, **caractérisé en ce que** l'enceinte (20) délimitée notamment par la membrane (18) contient un liquide diélectrique.

9. Dispositif de génération d'un arc électrique, **caractérisé en ce qu'**il présente un éclateur selon l'une des revendications 1 à 8, et **en ce que** la seconde électrode (6) est reliée à la masse dudit dispositif.

## Patentansprüche

1. Funkenstrecke einer Lichtbogenerzeugungsvorrichtung, umfassend:
- einen ersten Körper (11), der eine erste Stütze (12) für eine Elektrode trägt, die einer ersten Elektrode (2) zugeordnet ist, die ein erstes Ende (4) der Elektrode aufweist,
- einen zweiten Körper (13), der eine zweite Stütze (14) für eine Elektrode trägt, die einer zweiten Elektrode (6) zugeordnet ist, die gegenüber dem ersten Ende (4) der Elektrode angeordnet ist, und
- einen metallischen Verbindungsarm (10), der den ersten Körper (11) mit dem zweiten Körper (13) verbindet,
- wobei der erste Körper (11) und der zweite Körper (13) eine Außenform aufweisen, die im Wesentlichen zylindrisch ist, und auf einer gleichen Längsachse (22) fluchten,
**dadurch gekennzeichnet,**
**dass** das erste Ende (4) der Elektrode auf der Seite gegenüber dem Verbindungsarm (10) relativ zur Längsachse (22) versetzt ist.

2. Funkenstrecke nach Anspruch 1, **dadurch gekennzeichnet, dass** sie einen einzigen Verbindungsarm (10) aufweist.

3. Funkenstrecke nach einem der Ansprüche 1 oder 2, **dadurch gekennzeichnet, dass** die erste Elektrode (2) in Form einer Stange vorliegt, die an ihrem Ende das erste Ende (4) der Elektrode mit relativ zur Längsachse (22) geneigter Achse trägt.

4. Funkenstrecke nach einem der Ansprüche 1 bis 3, **dadurch gekennzeichnet, dass** die zweite Elektrode (6) eine Basis, die mit Mitteln zur Befestigung der zweiten Elektrode (6) auf der zweiten Stütze (14) versehen ist, und ein zweites Ende (8) der Elektrode, das gegenüber der Basis der zweiten Elektrode liegt und gegenüber dem ersten Ende (4) der Elektrode angeordnet ist, aufweist, dass die Basis der zweiten Elektrode (6) etwa mit der Längsachse (22) fluchtet und dass die zweite Elektrode (6) eine Abweichung aufweist, die dergestalt ist, dass das zweite Ende (8) der Elektrode auf der Seite gegenüber dem Verbindungsarm (10) relativ zur Längsachse (22) dezentriert ist.

5. Funkenstrecke nach einem der Ansprüche 1 bis 4, **dadurch gekennzeichnet, dass** die zweite Elektrode (6) gegenüber dem ersten Ende (4) der Elektrode eine konkave Fläche (24) aufweist.

6. Funkenstrecke nach einem der Ansprüche 1 bis 5, **dadurch gekennzeichnet, dass** die zweite Elektrode (6) eine Basis, die mit Mitteln zur Befestigung der zweiten Elektrode (6) auf der zweiten Stütze (14) versehen ist, und ein zweites Ende (8) der Elektrode, das gegenüber der Basis der zweiten Elektrode liegt und gegenüber dem ersten Ende (4) der Elektrode angeordnet ist, aufweist und dass das zweite Ende (8) der Elektrode ein separates Teil ist, das mittels mindestens eines Arretierstifts auf der zweiten Elektrode (6) befestigt ist.

7. Funkenstrecke nach einem der Ansprüche 1 bis 6, **dadurch gekennzeichnet, dass** sie eine Membran (18) umfasst, die die erste Elektrode (2), die zweite Elektrode (6) und den Verbindungsarm (10) zumindest teilweise so umgibt, dass sie eine Ummantelung (20) um einen Raum herum schafft, der sich zwischen der ersten Elektrode (2) und der zweiten Elektrode (6) befindet.

8. Funkenstrecke nach Anspruch 7, **dadurch gekennzeichnet, dass** die insbesondere durch die Membran (18) begrenzte Ummantelung (20) eine dielektrische Flüssigkeit enthält.

9. Lichtbogenerzeugungsvorrichtung, **dadurch gekennzeichnet, dass** sie eine Funkenstrecke nach einem der Ansprüche 1 bis 8 aufweist und dass die zweite Elektrode (6) mit der Masse der Vorrichtung verbunden ist.

## Claims

1. Spark-gap of an electric arc generation device, comprising:
- a first body (11) carrying a first electrode support (12) associated with a first electrode (2) having a first electrode end (4),
- a second body (13) carrying a second electrode support (14) associated with a second electrode (6) positioned facing the first electrode end (4), and
- a metal connecting arm (10) connecting the first body (11) to the second body (13), the first body (11) and the second body (13) having a generally cylindrical outer shape and being aligned with the same longitudinal axis (22),
**characterised in that** the first electrode end (4) is offset with respect to the longitudinal axis (22) at the side opposite to the connecting arm (10).

2. Spark-gap according to claim 1, **characterised in that** it has a single connecting arm (10).

3. Spark-gap according to one of claims 1 and 2, **characterised in that** the first electrode (2) is in the shape of a rod carrying, at its end, the first electrode end (4) having an axis inclined with respect to the longitudinal axis (22).

4. Spark-gap according to one of claims 1 to 3, **characterised in that** the second electrode (6) has a base provided with means for fastening the second electrode (6) onto the second support (14) and a second electrode end (8), opposite to the base of the second electrode and positioned facing the first electrode end (4), **in that** the base of the second electrode (6) is substantially aligned with the longitudinal axis (22), and **in that** the second electrode (6) has a recess in such a way that the second electrode end (8) is off-centre with respect to the longitudinal axis (22), at the side opposite to the connecting arm (10).

5. Spark-gap according to one of claims 1 to 4, **characterised in that** the second electrode (6) has, facing the first electrode end (4), a concave surface (24).

6. Spark-gap according to one of claims 1 to 5, **characterised in that** the second electrode (6) has a base provided with means for fastening the second electrode (6) onto the second support (14) and a second electrode end (8), opposite to the base of the second electrode and positioned facing the first electrode end (4), and **in that** the second electrode end (8) is a separate part fastened onto the second electrode (6) using at least one pin.

7. Spark-gap according to one of claims 1 to 6, **characterised in that** it comprises a membrane (18) at least partly surrounding the first electrode (2), the second electrode (6) and the connecting arm (10) in such a way as to create a sealed chamber (20) around a space between the first electrode (2) and the second electrode (6).

8. Spark-gap according to claim 7, **characterised in that** the chamber (20) defined in particular by the membrane (18) contains a dielectric liquid.

9. Device for generating an electric arc, **characterised in that** it has a Spark-gap according to one of claims 1 to 8, and **in that** the second electrode (6) is connected to the ground of said device.
